# EUROPEAN PATENT SPECIFICATION

(11) **EP 2 515 376 B1**
(45) Date of publication and mention of the grant of the patent: **25.01.2017**
(21) Application number: 11162873.1
(22) Date of filing: 18.04.2011
(51) Int. Cl.: H01Q 1/42, H01Q 19/06, H01Q 19/08, H01Q 1/22, G01F 23/284

(54) **Filling level measuring device antenna cover**
Antennenabdeckung-Füllstandsmessvorrichtung
Couvercle d'antenne de dispositif de mesure du niveau de remplissage

(43) Date of publication of application: 24.10.2012
(73) Proprietor: VEGA Grieshaber KG, 77709 Wolfach (DE)
(72) Inventor: Kienzle, Klaus, 77736 Zell am Harmersbach (DE); Sum, Christian, 77709 Wolfach (DE); Kopp, Thomas, 77709 Wolfach (DE)
(74) Representative: Maiwald Patentanwalts GmbH

(56) References cited:
- EP-A1- 2 031 700
- WO-A1-02/41446
- WO-A1-2008/037302
- WO-A2-02/50954
- DE-A1-102006 030 965
- JP-A- 59 022 403
- US-A1- 2004 108 963
- LJ DU AND DJ SCHEER: "Microwave lens design for a conical horn antenna", MICROWAVE JOURNAL, HORIZON HOUSE PUBLICATIONS, NORWOOD, MA, US, vol. 19, no. 9, 1 September 1976 (1976-09-01), pages 49-52, XP002201814, ISSN: 0192-6225

## Description

### Field of the invention

The present invention relates to filling level measuring. In particular, the present invention relates to a filling level measuring device antenna cover of a filling level measuring device, an antenna of a filling level measuring device comprising a cover, a filling level measuring device and a method of producing a filling level measuring device antenna cover.

### Technological background

Known filling level measuring devices comprise parabolic antennas or horn antennas that transmit or receive radar waves or microwaves in order to determine the filling level of a medium in a filling level container. The antenna of such a filling level measuring device is, for example, arranged within the container.

For maximizing the antenna gain, the length of the antenna may be adjusted according to the frequency of the electromagnetic transmission signal used.

If the length of the antenna is reduced (without increasing the frequency of the transmit signal and without changing the aperture of the antenna), the antenna gain usually decreases and the intensity of secondary lobes increase.

In order to increase the antenna gain, a convex lens may be positioned at the end of the antenna horn, which lens may consist of a dielectric material. Such a lens changes the relative phase between microwaves which cross the lens in its outer region and microwaves which cross the lens in its centre, thus resulting in a phase correction between the two parts of the transmission signal, which in turn results in a more or less planar phase front of the transmission signal after it has left the antenna and the lens.

Such lenses are produced from an unmachined part by milling or lathing.

DE 10 2006 030 965 A1 describes a planar antenna with a protection cover on the planar radiator.

WO 02/50954 A2 describes a microwave horn antenna for level measurement systems with a lens covering the antenna horn.

WO 2008/037302 A1 describes a cover for a horn antenna without lens-effect.

WO 02/41446 A1 describes a horn antenna with a dielectric filling.

### Summary of the invention

It may be seen as an object of the invention to provide an antenna cover which can be produced at low costs.

The invention is defined in the appended claims.

According to a first aspect of the present invention a filling level measuring device antenna cover for covering an antenna of a filling level measuring device is provided, wherein the cover comprises a base body and a plurality of circular fins which are concentrically arranged on the base body. Both the plurality of circular fins and the base body consist of a plastic material and may be integrally formed, i.e. in one piece.

According to another aspect of the invention, an antenna of a filling level measuring device is provided, which comprises the above and below described filling level measuring device antenna cover.

According to another aspect of the invention, a filling level measuring device is provided, which comprises the above and below described antenna.

According to another aspect of the invention, a method of producing the above and below described filling level measuring device antenna cover is provided in which the cover is injection-moulded.

By providing a base body with a plurality of circular fins concentrically arranged thereon, the whole antenna cover can be moulded in one single piece, without the need for milling or lathing steps. Thus, the costs for producing the cover may be significantly reduced.

The antenna cover is adapted for focusing electromagnetic radiation emitted by the antenna, i.e. the transmission signal. In other words, the antenna cover is not only used for covering, i.e. sealing, one end of the antenna but also as a lens which focuses the transmission signal and increases the antenna gain.

According to another embodiment of the present invention, the antenna cover is adapted as a lens that has at least one of a convex surface and a concave surface. For example, the surface which faces the filling medium inside the container, i.e. the outer surface of the antenna cover, may be convex or concave. According to another exemplary embodiment of the present invention, at least one of the fins has a constant thickness. The term "thickness" refers to the distance between opposite surfaces of the fin. In other words, the fin (or each of the fins) has the shape of a hollow cylinder.

According to the present invention, the base body has a constant thickness. Again, the thickness of the base body corresponds to the distance between the two opposite, inner and outer surfaces of the base body.

In other words, the cover may comprise a plurality of sections, wherein each section has a constant thickness. This may improve the quality of the cover in case it is produced by injection moulding or die casting.

One advantage of having fins and base body sections which each have a constant thickness and wherein the thicknesses of the sections are identical or do not differ more than, let's say, by 60% or 70%, is that all sections of the cover need more or less the same time for solidifying during (or after) the moulding process.

According to another exemplary embodiment of the present invention, two adjacent fins of the plurality of fins have the same thickness, wherein a distance between the two adjacent fins is equal to the thickness of each of the two adjacent fins.

In other words, two or more or even all of the fins have the same thickness and are concentrically arranged with respect to each other, wherein the distance between each fin and its neighbour(s) corresponds to its thickness.

According to another exemplary embodiment of the present invention, the thickness of each of the fins is between 60% and 80%, and in particular 70% of the thickness of the base body.

According to another exemplary embodiment of the present invention the cover further comprises a dome arranged in a centre of the plurality of fins, i.e. in the centre of the cover. This dome may be the place where the material the cover consists of is injected into the mould.

Furthermore, according to another embodiment of the present invention, the cover has a conical shape. This means that, if the areas between the concentrically arranged fins would be filled with a material, the cross-section of the (filled) antenna cover has approximately the shape of a triangle.

According to the present invention, the base body and the plurality of circular fins are injection-moulded in one piece.

A great variety of different materials may be used for forming the base body and the fin, for example plastic materials with a dielectric constant bigger than that of vacuum. For example perfluoroalkoxy (PFA), polyvinylidene fluoride (PVDF), polyoxymethylene (POM), poly(*p*-phenylene sulfide) (PPS), polypropylene (PP) or polytetrafluoroethylene (PTFE) may be used.

According to a further exemplary embodiment of the present invention, the frequency of the transmission signal is between 1 GHz and 100 GHz, between 24 GHz and 27 GHz, in particular 25,3 GHz or between 50 GHz and 100 GHz, in particular between 75 GHz and 85 GHz.

Of course the cover may also be dimensioned such that it can be used with an antenna designed for frequencies higher than 100 GHz.

The cover may, for example, be a lens of an aspherical or a spherical design. In particular, the cover may be a biconvex, plan-convex or a concave-convex lens. Below, exemplary embodiments of the present invention are described with reference to the drawings.

### Brief description of the drawings

Fig. 1 shows a cross-sectional view of an antenna according to an exemplary embodiment of the present invention.
Fig. 2 shows a further cross-sectional view of the antenna of Fig. 1.
Fig. 3 shows a semi-cross-sectional view of the antenna of Fig. 1.
Fig. 4A shows a cross-sectional view of an antenna according to another exemplary embodiment of the present invention.
Fig. 4B shows another cross-sectional view of the antenna of Fig. 4A.
Fig. 5A shows a cross-sectional view of an antenna according to another exemplary embodiment of the present invention.
Fig. 5B shows another cross-sectional view of the antenna of Fig. 5A.
Fig. 6 shows a filling level measuring device according to an exemplary embodiment of the present invention.
Fig. 7 shows a flow-chart of a method according to an exemplary embodiment of the present invention.

### Detailed description of embodiments

The illustration in the drawings is schematically. In different drawings, similar or identical elements are provided with the same reference numerals.

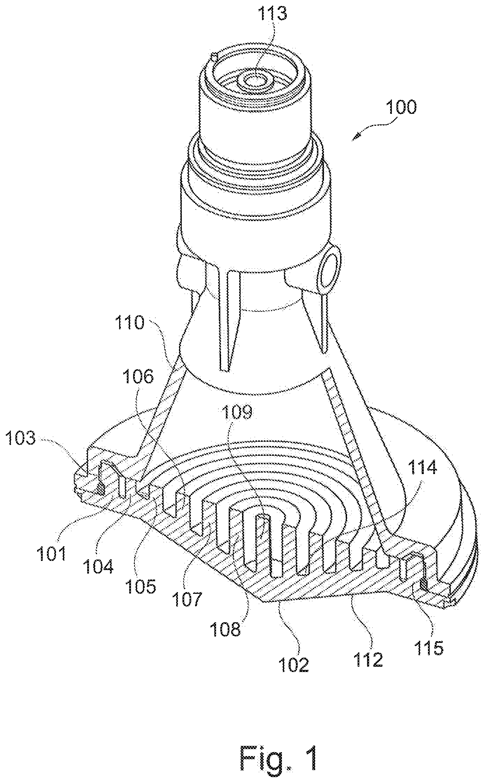

Fig. 1 shows a three-dimensional cross-sectional view of an antenna of a filling level measuring device according to an exemplary embodiment of the present invention. The antenna 100 is a horn antenna for a filling level radar and comprises an antenna horn 110 into which a transmission signal is fed from the top. Between the signal feed line 113, which is arranged at the top of the antenna 100 and the antenna horn 110 an optional cone-like element is disposed for improving the signal quality by reducing so cal led antenna ringing ("Antennenklingeln") or other unwanted oscillations.

At the open end of the antenna horn, which faces in the direction of the filling medium when the antenna is arranged in or at a container, an antenna cover 101 is attached.

The antenna cover 101 comprises a base body 102 which has an outer surface 112 facing in the direction of the filling medium, i.e. away from the antenna, and an inner surface 114, which faces away from the filling medium towards the inside of the antenna 100 in particular towards the feed line 113, On the upper, inner surface 114 of the base body 103 a plurality of circular fins 103, 104, 105, 106, 107, 108 and a central dome 109 are arranged. The base body 102, the plurality of circular fins 103-108 and the dome 109 form one single part and are fabricated by injection moulding or die casting, for example.

The antenna cover 101 is attached to the antenna horn 110 and a sealing ring 115 is provided therebetween in order to provide a tight seal between the antenna horn and the cover. The cover is mounted to the antenna horn by a threading, for example, which may be positioned above the sealing 115. Alternatively, the cover is mounted to the antenna horn by several bolts or screws, for example eight screws, at a region outside the sealing 115.

The shape and dimensions of the antenna cover are designed such that the cover can be injection-moulded. For example, thickness of the cover does not vary a lot. In particular, the fins 105-108 and the dome 109 all have the same thickness. The outer fins 103, 104 which are used for attaching cover to the antenna horn, for sealing the cover and the antenna horn and/or for supporting or strutting the antenna cover with respect to the antenna horn may have a different thickness. The thickness and dimensions of the outer parts is less important, since they do not influence the high frequency properties of the cover significantly.

It should be noted that the upper surface 114 and the lower surface 112 of the base body 102 are parallel with respect to each other and that the fins 104-108 have the shape of hollow cylinders.

For example, the thickness of each of the fins 105-108 is 0,7 times the thickness of the base body 102, or less. This may assure that the material used for molding the cover solidifies at every region at basically the same time.

Furthermore, the room between two adjacent fins is for example 2 mm in width or even wider. The cover material is for example injected at the top of the central dome 109.

When designing the antenna cover such that it can be injection-moulded, also microwave-related criteria have to be observed in order to assure an appropriate optical function of the cover, i.e. the lens. An appropriate design may be developed with the help of three-dimensional field simulations and examples of such a design are depicted in the drawings.

For example, the width of the fins 105-108 are approximately half the wavelength of the transmit signal inside the plastic material. If a frequency of the transmit signal of 26 GHz is used and polypropylene is used as plastic material for injection moulding the cover, the width of each fin is approximately 4 mm, considering a dielectric constant of approximately 2,2.

Exemplary embodiments of the cover may depart from the thickness of λ/2 by 10-15%. Departing from the λ/2 thickness may result in a lower antenna gain and in a decrease of the quality of the emission characteristics of the antenna.

The thickness S of the base body 102 may be 10/7 of the thickness of the fins T. Therefore, for the above example the thickness of the base body may be around 5,7 mm.

The distance between two adjacent fins may be the same as the thickness T of the fins, i.e. 4 mm.

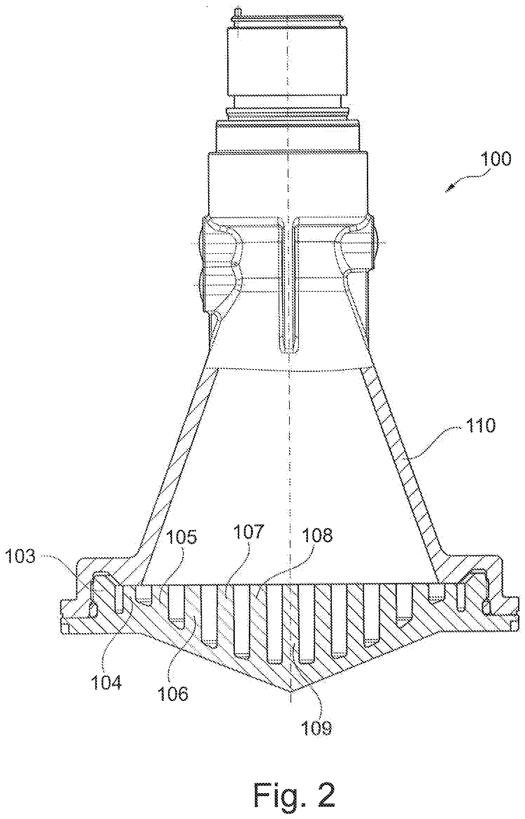

Fig. 2 shows another cross-sectional view of the antenna 100 of Fig. 1.

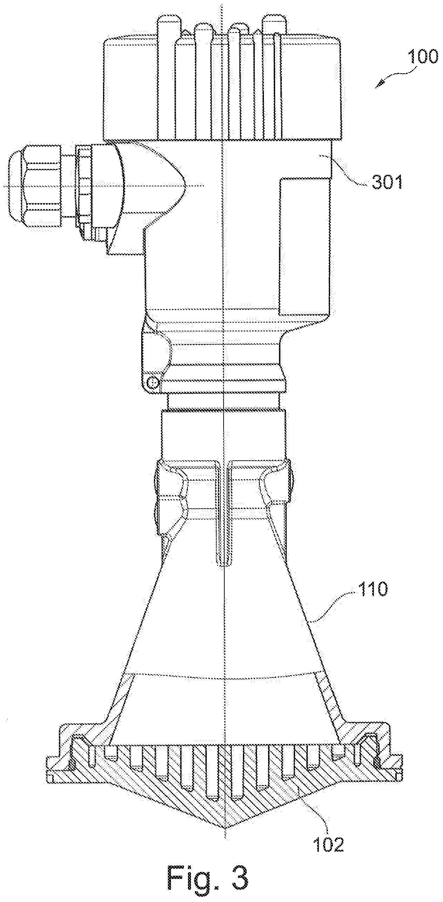

Fig. 3 shows the antenna of Fig. 1, wherein the lower section of the antenna which comprises the cover 102 is shown in a cross-sectional view. The upper part of the antenna comprises a housing 301.

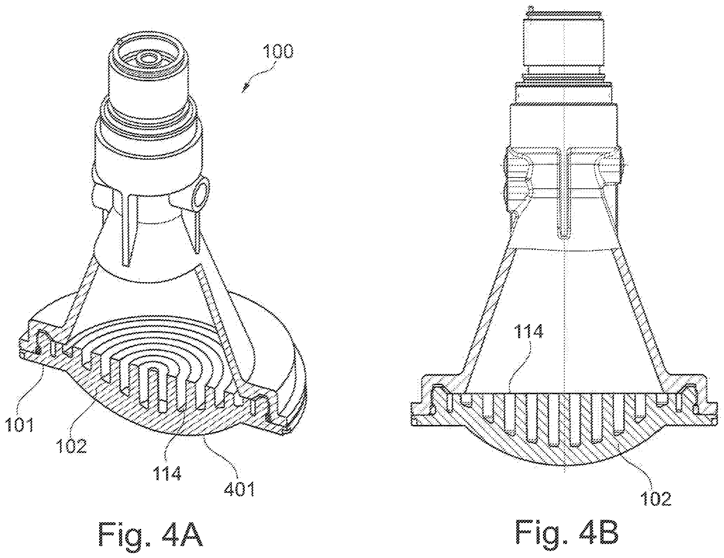

Fig. 4A shows a three-dimensional cross-sectional view of an antenna 100 with a cover 101 according to another exemplary embodiment of the present invention.

The outer surface 401 of the base body 102 is concave and the inner surface 114 of the base body is parallel to concave outer surface 401.

In contrast to the embodiment depicted in Figs. 1 to 3 the lens-like cover 101 is not plane-convex, i.e. cone-shaped, but spherical with respect to its outer, lower surface 401.

The upper, inner surface 114 of the plurality of circular fins is planar (as it is in the embodiment depicted in Figs. 1 to 3).

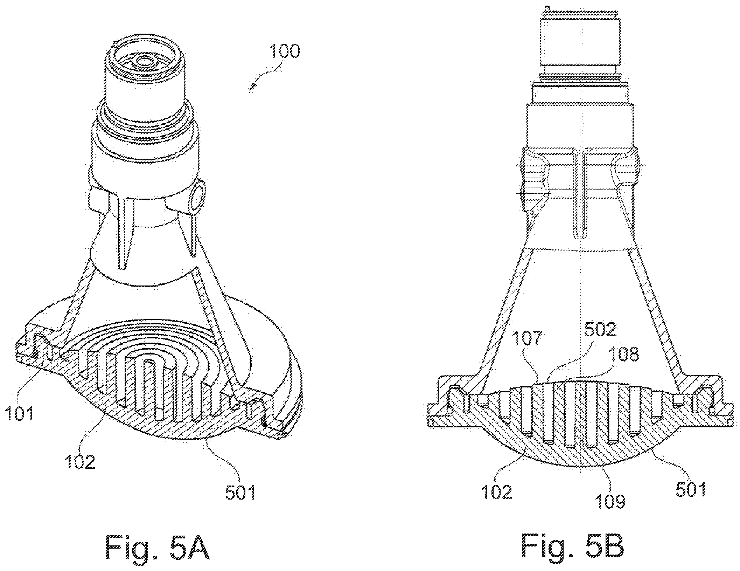

Fig. 5A shows a three-dimensional cross-sectional view of an antenna 100 according to another exemplary embodiment of the present invention, in which the antenna cover 101 has a base body 102 with a concave outer surface 501. Furthermore, as may be seen from Fig. 5B, the inner surface 502 of the plurality of circular fins is also concave and therefore, in contrast to the embodiments depicted in Figs. 1 to 4, non-planar.

Consequently, the height of the circular fins 107, 108 (which are close to the centre of the cover at which the dome 109 is located) is bigger than the height of the corresponding fins 107, 108 of the embodiments depicted in Figs. 1 to 4.

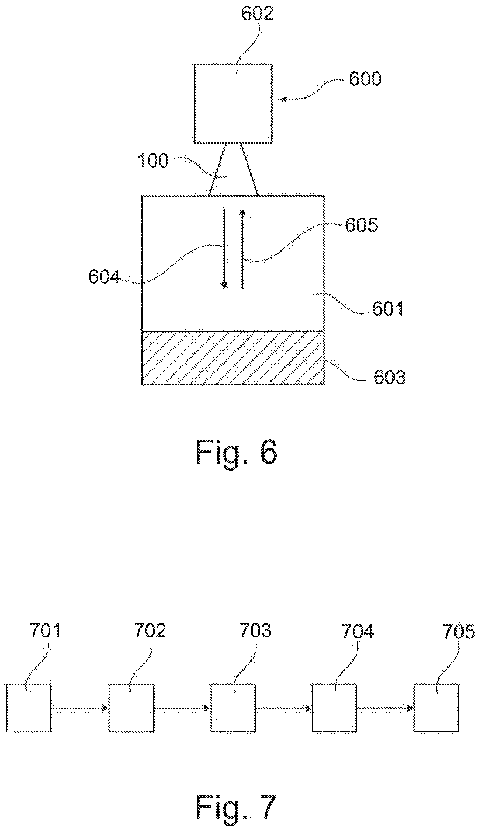

Fig. 6 shows a filling level measuring device 600, for example a filling level radar, which comprises a housing 602, comprising the electronics, and the antenna 100, which is mounted to a container 601. The container 601 comprises the filling medium 603.

The antenna 100 is adapted for emitting a transmit signal 604 towards the filling medium 603 inside the container and for receiving a corresponding reflected signal 605 from the filling medium.

Fig. 7 shows a flow-chart of a method according to an exemplary embodiment of the invention. In step 701 a mould is provided and in step 702 a plastic material is injected into the mould, thus forming antenna cover with a base body and a plurality of circular fins concentrically arranged on the base body. In step 703 the mould is removed and in step 704 the cover is removed from the mould. Polishing of the cover after molding is not necessary if the mould has a polished surface.

In step 705 the cover is attached to an antenna horn of a filling level measuring device.

Thus, a focusing lens of a microwave antenna system of a filling level measuring device, such as a filling level radar, may be injection-moulded by injecting a dielectric material into a mould. The high frequency properties of the antenna cover may notbe significantly different from the high frequency properties of a corresponding antenna cover which is produced by milling or lathing of a work piece, wherein the latter cover comprises varying thicknesses.

The cover may be polished while it is still attached to a part of the mould. By polishing the surfaces of the cover an adhesion of material to the cover may be reduced or even prevented. This may be in particular advantageous when the antenna is used in the area of food production.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A filling level measuring device antenna cover (101) adapted to function as a lens, for covering an antenna (100) of a filling level measuring device (600) and adapted for focusing electromagnetic radiation emitted by the antenna (100), comprising:
a base body (102); and
a plurality of circular fins each having the shape of a hollow cylinder (103, 104, 105, 106, 107, 108) concentrically arranged on an inner surface (114) of the base body (102), which faces towards an inside of the antenna (100) when the cover covers the antenna (100);
wherein the fins and the base body consist of a plastic material;
wherein the cover is adapted as a lens having at least one of a convex surface and a concave surface;
wherein the base body (102) has a constant thickness; and
wherein the base body (102) and the plurality of circular fins (103, 104, 105, 106, 107, 108) are injection molded.

2. A filling level measuring device antenna cover (101) adapted to function as a lens, for covering an antenna (100) of a filling level measuring device (600) and adapted for focusing electromagnetic radiation emitted by the antenna (100), comprising:
a base body (102); and
a plurality of circular fins each having the shape of a hollow cylinder (103, 104, 105, 106, 107, 108) concentrically arranged on an inner surface (114) of the base body (102), which faces towards an inside of the antenna (100) when the cover covers the antenna (100);
wherein the fins and the base body consist of a plastic material;
wherein the cover has a conical shape;
wherein the base body (102) has a constant thickness, and
wherein the base body (102) and the plurality of circular fins (103, 104, 105, 106, 107, 108) are injection molded.

3. The cover (101) of one of the preceding claims,
wherein at least one of the fins (103, 104, 105, 106, 107, 108) has a constant thickness.

4. The cover (101) of one of the preceding claims,
wherein two adjacent fins (103, 104) have the same thickness; and
wherein a distance between two opposite surfaces of the two adjacent fins (103, 104) is equal to the thickness of each of the two adjacent fins (103, 104).

5. The cover (101) of claim 4,
wherein the thickness of each of the fins (103, 104, 105, 106, 107, 108) is between 60 per cent and 80 per cent, and in particular 70 per cent, of the thickness of the base body (102).

6. The cover (101) of one of the preceding claims, further comprising:
a dome (109) arranged in a center of the plurality of fins (103, 104, 105, 106, 107, 108).

7. An antenna (100) for a filling level measuring device (600) comprising a filling level measuring device antenna cover (101) of one of claims 1 to 6.

8. A filling level measuring device (600) comprising the antenna of claim 7.

9. The filling level measuring device (600) of claim 8, adapted as a filling level radar.

10. A method of producing a filling level measuring device antenna cover (101) of one of claims 1 to 6, the method comprising the step of:
injection molding the cover (101).

## Patentansprüche

1. Füllstandmessgerät-Antennenabdeckung (101), die dazu ausgeführt ist, als eine Linse zu wirken, um eine Antenne (100) eines Füllstandmessgeräts (600) abzudecken und die dazu ausgeführt ist, elektromagnetische Strahlung, die durch die Antenne (100) ausgesendet wird, zu fokussieren, aufweisend:
einen Grundkörper (102); und
eine Vielzahl von kreisförmigen Rippen, jeweils mit der Form eines Hohlzylinders (103, 104, 105, 106, 107, 108), die konzentrisch auf einer Innenfläche (114) des Grundkörpers (102) angeordnet sind, welche in Richtung eines Inneren der Antenne (100) ausgerichtet ist, wenn die Abdeckung die Antenne (100) abdeckt;
wobei die Rippen und der Grundkörper aus einem plastischen Material bestehen;
wobei die Abdeckung als eine Linse mit zumindest einer konvexen Oberfläche oder einer konkaven Oberfläche ausgeführt ist;
wobei der Grundkörper (102) eine konstante Dicke hat; und
wobei der Grundkörper (102) und die Vielzahl von kreisförmigen Rippen (103, 104, 105, 106, 107, 108) spritzgeformt sind.

2. Füllstandmessgerät-Antennenabdeckung (101), die dazu ausgeführt ist, als eine Linse zu wirken, um eine Antenne (100) eines Füllstandmessgeräts (600) abzudecken und die dazu ausgeführt ist, elektromagnetische Strahlung, die durch die Antenne (100) ausgesendet wird, zu fokussieren, aufweisend:
einen Grundkörper (102); und
eine Vielzahl von kreisförmigen Rippen, jeweils mit der Form eines Hohlzylinders (103, 104, 105, 106, 107, 108), die konzentrisch auf einer Innenfläche (114) des Grundkörpers (102) angeordnet sind, welche in Richtung eines Inneren der Antenne (100) ausgerichtet ist, wenn die Abdeckung die Antenne (100) abdeckt;
wobei die Rippen und der Grundkörper aus einem plastischen Material bestehen;
wobei die Abdeckung eine konische Form hat;
wobei der Grundkörper (102) eine konstante Dicke hat; und
wobei der Grundkörper (102) und die Vielzahl von kreisförmigen Rippen (103, 104, 105, 106, 107, 108) spritzgeformt sind.

3. Abdeckung (101) nach einem der vorhergehenden Ansprüche,
wobei mindestens eine der Rippen (103, 104, 105, 106, 107, 108) eine konstante Dicke aufweist.

4. Abdeckung (101) nach einem der vorhergehenden Ansprüche,
wobei zwei benachbarte Rippen (103, 104) die gleiche Dicke haben; und
wobei ein Abstand zwischen zwei gegenüberliegenden Oberflächen der beiden benachbarten Rippen (103, 104) gleich der Dicke jeder der beiden benachbarten Rippen (103, 104) ist.

5. Abdeckung (101) nach Anspruch 4,
wobei die Dicke jeder der Rippen (103, 104, 105, 106, 107, 108) zwischen 60 Prozent und 80 Prozent, insbesondere 70 Prozent, der Dicke des Grundkörpers (102) beträgt.

6. Abdeckung (101) nach einem der vorhergehenden Ansprüche, ferner aufweisend:
einen Dom (109), der in einer Mitte der Vielzahl von Rippen (103, 104, 105, 106, 107,108) angeordnet ist.

7. Antenne (100) für ein Füllstandmessgerät (600), aufweisend eine Füllstandmessgerätantennenabdeckung (101) nach einem der Ansprüche 1 bis 6.

8. Füllstandmessgerät (600), aufweisend die Antenne nach Anspruch 7.

9. Füllstandmessgerät (600) nach Anspruch 8, das als Füllstandradar ausgeführt ist.

10. Verfahren zur Herstellung einer Füllstandmessgerätantennenabdeckung (101) nach einem der Ansprüche 1 bis 6, das Verfahren aufweisend den Schritt:
Spritzformen der Abdeckung (101).

## Revendications

1. Couvercle d'antenne pour dispositif de mesure de niveau de remplissage (101) adapté pour fonctionner comme une lentille, destiné à recouvrir une antenne (100) d'un dispositif de mesure de niveau de remplissage (600) et adapté pour focaliser un rayonnement électromagnétique émis par l'antenne (100), comportant :
un corps de base (102), et
une pluralité d'ailettes circulaires ayant chacune la forme d'un cylindre creux (103, 104, 105, 106, 107, 108) agencées de manière concentrique sur une surface intérieure (114) du corps de base (102), laquelle surface est dirigée vers l'intérieur de l'antenne (100) lorsque le couvercle recouvre l'antenne (100),
dans lequel les ailettes et le corps de base sont constitués d'une matière plastique,
dans lequel le couvercle est adapté pour faire office de lentille ayant au moins une surface parmi une surface convexe et une surface concave,
dans lequel le corps de base (102) a une épaisseur constante, et
dans lequel le corps de base (102) et la pluralité d'ailettes circulaires (103, 104, 105, 106, 107, 108) sont moulés par injection.

2. Couvercle d'antenne pour dispositif de mesure de niveau de remplissage (101) adapté pour fonctionner comme une lentille, destiné à recouvrir une antenne (100) d'un dispositif de mesure de niveau de remplissage (600) et adapté pour focaliser un rayonnement électromagnétique émis par l'antenne (100), comportant :
un corps de base (102), et
une pluralité d'ailettes circulaires ayant chacune la forme d'un cylindre creux (103, 104, 105, 106, 107, 108) agencées de manière concentrique sur une surface intérieure (114) du corps de base (102), laquelle surface est dirigée vers l'intérieur de l'antenne (100) lorsque le couvercle recouvre l'antenne (100),
dans lequel les ailettes et le corps de base sont constitués d'une matière plastique,
dans lequel le couvercle a une forme conique,
dans lequel le corps de base (102) a une épaisseur constante, et
dans lequel le corps de base (102) et la pluralité d'ailettes circulaires (103, 104, 105, 106, 107, 108) sont moulés par injection.

3. Couvercle (101) selon l'une des revendications précédentes,
dans lequel au moins une des ailettes (103, 104, 105, 106, 107, 108) a une épaisseur constante.

4. Couvercle (101) selon l'une des revendications précédentes,
dans lequel deux ailettes adjacentes (103, 104) ont la même épaisseur, et
dans lequel une distance entre deux surfaces opposées de deux ailettes adjacentes (103, 104) est égale à l'épaisseur de chacune des deux ailettes adjacentes (103, 104).

5. Couvercle (101) selon la revendication 4,
dans lequel l'épaisseur de chacune des ailettes (103, 104, 105, 106, 107, 108) est comprise entre 60 pour-cent et 80 pour-cent, et en particulier 70 pour-cent, de l'épaisseur du corps de base (102).

6. Couvercle (101) selon l'une des revendications précédentes, comportant en outre :
un dôme (109) agencé au centre de la pluralité d'ailettes (103, 104, 105, 106, 107, 108).

7. Antenne (100) pour un dispositif de mesure de niveau de remplissage (600) comportant un couvercle d'antenne pour dispositif de mesure de niveau de remplissage (101) selon l'une des revendications 1 à 6.

8. Dispositif de mesure de niveau de remplissage (600) comportant l'antenne de la revendication 7.

9. Dispositif de mesure de niveau de remplissage (600) selon la revendication 8, adapté pour faire office de radar de niveau de remplissage.

10. Procédé de production d'un couvercle d'antenne pour dispositif de mesure de niveau de remplissage (101) selon l'une des revendications 1 à 6, le procédé comportant l'étape consistant à :
mouler le couvercle (101) par injection.
